# FASCICULE DE BREVET EUROPEEN

(11) **EP 1 566 322 B1**
(45) Date de publication et mention de la délivrance du brevet: **25.11.2009**
(21) Numéro de dépôt: 05290291.3
(22) Date de dépôt: 09.02.2005
(51) Int. Cl.: B61D 1/06, B61D 17/12

(54) **Véhicule d'extrémité de transport de passagers et/ou de fret, avec un toit dont la hauteur est étagée.**
Endwagen zum Transport von Passagieren und/oder Fracht, dessen Dach sich stufenweise anhebt.
Leading vehicle for the transport of passangers and/or freight, with a stepwise varying roof height.

(30) Priorité: 20.02.2004 FR 0401734
(43) Date de publication de la demande: 24.08.2005
(73) Titulaire: ALSTOM Transport SA, 92300 Levallois-Perret (FR)
(72) Inventeur: Gregoire, Rémi, 17440 Aytre (FR); Benazzouz, Tewfik, 59300 Valenciennes (FR); Devulder, Guy, 59990 Estreux (FR)
(74) Mandataire: Blot, Philippe Robert Emile

(56) Documents cités:
- EP-A- 0 616 935
- EP-A- 0 916 562
- US-A- 2 519 049
- PATENT ABSTRACTS OF JAPAN vol. 2000, no. 02, 29 février 2000 (2000-02-29) & JP 11 321640 A (KAWASAKI HEAVY IND LTD), 24 novembre 1999 (1999-11-24)
- BOUTONNET J-C ET AL: "LES AUTOMOTRICES REGIONALES TER-2N" REVUE GENERALE DES CHEMINS DE FER, CENTRALE DES REVUES DUNOD-GAUTHIER-VILLARS. PARIS, FR, no. 11, 1 novembre 1997 (1997-11-01), pages 11-26, XP000732877 ISSN: 0035-3183

## Description

La présente invention concerne un véhicule ferroviaire d'extrémité pour une rame de transport de passagers.

De nos jours, les transports régionaux et interrégionaux font appel à des rames circulant à des vitesses de plus en plus élevées. De fait, celles-ci sont susceptibles de circuler à des vitesses proches de 200 km/h et notamment comprises entre 140 km/h et 250 km/h.

Ces rames sont destinées au transport de passagers. Afin d'obtenir une capacité maximale, il est connu que chaque véhicule de la rame comporte deux planchers superposés formant deux niveaux où peuvent séjourner les passagers.

Afin de réduire le coût d'une telle rame, celle-ci est constituée d'un ensemble de véhicules successifs reliés les uns aux autres, et d'une unique locomotive disposée à une extrémité de la rame. D'une manière générale, les différents véhicules de transport des passagers sont dépourvus de moyens locomoteurs.

Pour faciliter l'exploitation de telles rames, celles-ci sont adaptées pour circuler avec la locomotive à l'avant ou à l'arrière de la rame en considérant le sens d'avancement de la rame. Ainsi, une cabine de conduite est disposée à l'extrémité de la rame opposée à la locomotive, afin de permettre la conduite de la rame avec la locomotive en position arrière. De telles rames sont couramment désignées par l'anglicisme "push pull".

Ces rames à deux niveaux ont une hauteur importante de sorte que les véhicules la constituant sont très fortement sollicités par les vents transversaux, du fait de la grande surface exposée aux vents.

En cas de vents transversaux importants, il est prévu une limitation de la vitesse de circulation des rames, pour éviter un basculement (renversement) et/ou un déraillement de celles-ci. Par vent latéral fort, la vitesse de la rame est réduite de sa vitesse nominale à une vitesse pouvant descendre jusqu'à 80 km/h

Les opérateurs de transport souhaitent disposer de rames de transport ne nécessitant pas une telle réduction de la vitesse d'exploitation en cas de vent important.

EP-A1-0 616 935 décrit un véhicule d'extrémité de rame selon le préambule de la revendication 1.

L'invention a pour objet de proposer une rame de type "push pull", de grande stabilité, permettant en particulier une circulation à la vitesse maximale, même en présence de vents transversaux forts.

A cet effet, l'invention a pour objet un véhicule d'extrémité d'une rame de transport de passagers du type précité, tel que défini dans la revendication 1. .

Suivant des modes particuliers de réalisation, le véhicule d'extrémité comporte l'une ou plusieurs des caractéristiques suivantes :
- la section basse s'étend entre le cinquième et les quatre cinquièmes de la longueur totale du véhicule d'extrémité ;
- la section basse s'étend sur sensiblement la moitié de la longueur totale du véhicule d'extrémité ;
- le toit comporte une rampe reliant le tronçon abaissé au tronçon surélevé ;
- la rampe est généralement convexe et fait saillie vers l'extérieur ;
- la rampe comporte une plage transparente ;
- il comporte un lest disposé dans la partie basse de la caisse ;
- il est dépourvu de moyens locomoteurs ;
- le rapport de la hauteur de la section basse sur la hauteur de la section haute est compris entre 0,69 et 0,98 ;
- la différence de hauteur entre la section haute et la section basse est comprise entre 0,1 m et 1,6 m ; et
- il comporte une cabine de conduite disposée à son extrémité libre.

L'invention a également pour objet une rame comportant, à un bout, un véhicule d'extrémité tel que décrit ci-dessus et, à l'autre bout, une locomotive, la rame comportant en outre, entre le véhicule d'extrémité et la locomotive, au moins un véhicule intermédiaire prolongeant le véhicule d'extrémité depuis son extrémité de liaison, les véhicules intermédiaires étant dépourvus de moyens locomoteurs.

Avantageusement, le ou chaque véhicule intermédiaire comporte deux planchers superposés pour le transport des passagers.

L'invention sera mieux comprise à la lecture de la description qui va suivre, donnée uniquement à titre d'exemple et faite en se référant aux dessins, sur lesquels :
- la figure 1 est une vue en élévation d'un premier mode de réalisation d'une rame selon l'invention ;
- la figure 2 est une vue en coupe longitudinale à plus grande échelle d'un premier mode de réalisation du véhicule d'extrémité de la rame de la figure 1 ;
- les figures 2A et 2B sont des vues de dessus en coupe longitudinale du véhicule de la figure 1, ces vues étant réalisées, respectivement, au niveau inférieur et au niveau supérieur ;
- la figure 3 est une vue identique à celle de la figure 2 d'un autre mode de réalisation du véhicule d'extrémité selon l'invention ; et
- les figures 3A et 3B sont des vues de dessus en coupe longitudinale du véhicule de la figure 2, ces vues étant réalisées, respectivement au niveau inférieur et au niveau supérieur.

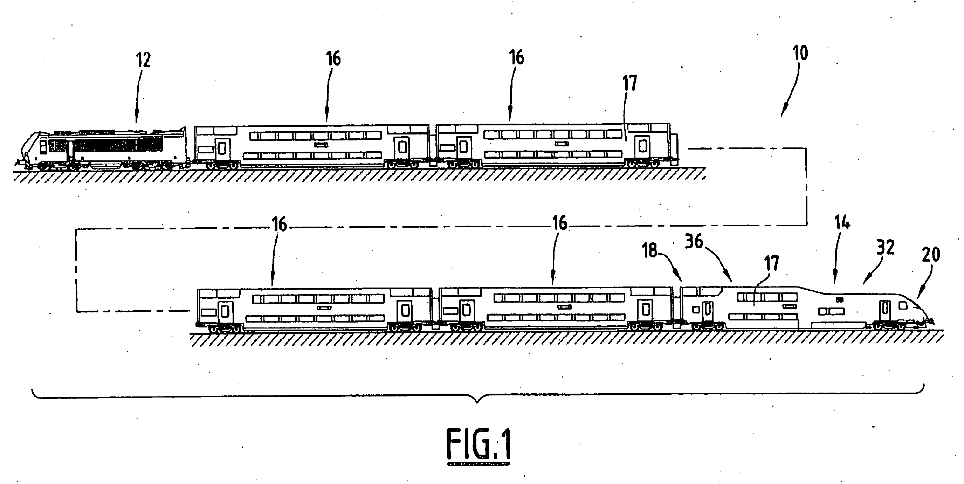

La rame 10 illustrée sur la figure 1 est destinée à assurer des liaisons régionales ou interrégionales entre villes distantes. Cette rame ou train est de type "push pull". Sa vitesse nominale de circulation est sensiblement égale à 200 km/h et est plus généralement comprise entre 140 km/h et 250 km/h.

La rame 10 est constituée d'une unique locomotive 12 disposée à une extrémité et de plusieurs véhicules disposés à la suite les uns des autres. Dans l'exemple considéré, ces véhicules sont dépourvus de moyens locomoteurs.

Ainsi, la rame comporte un véhicule d'extrémité 14 disposé à l'extrémité de la rame opposée à la locomotive 12 et des véhicules intermédiaires 16 disposés entre la locomotive 12 et le véhicule d'extrémité 14. Le nombre de véhicules intermédiaires est compris avantageusement entre deux et cinq. Il est de quatre dans l'exemple représenté.

La locomotive 14 est par exemple une locomotive électrique à alimentation par caténaire.

Chaque véhicule de transport des passagers, qu'il s'agisse du véhicule d'extrémité 14 ou des véhicules intermédiaires 16, comporte au moins partiellement deux planchers superposés délimitant deux niveaux pour le séjour des passagers.

Chaque véhicule comporte une caisse 17 supportée par deux bogies disposés au voisinage des extrémités de la caisse ou supportée par des bogies "intercaisse" communs aux autres caisses . La distance entre bogies d'un même véhicule est comprise entre 12 m et 24 m et est, dans l'exemple considéré, de 20 m.

Les véhicules intermédiaires 16 sont de tout type adapté. Ils présentent une hauteur totale comprise entre 4,3 m et 5,2 m. Cette hauteur est par exemple égale à 4575 mm. Le toit des véhicules intermédiaires est de forme générale cylindrique de section semi-circulaire, les génératrices s'étendant suivant la longueur de la rame. Ces véhicules intermédiaires ont deux planchers superposés s'étendant sur presque toute leur longueur.

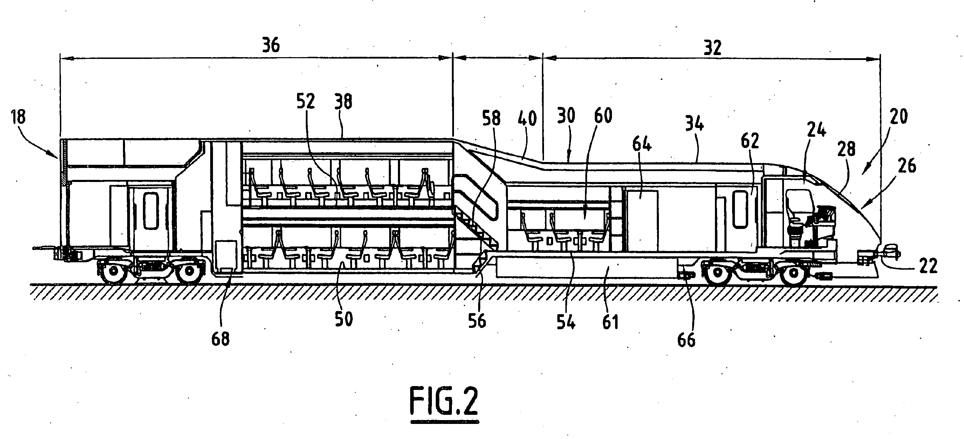

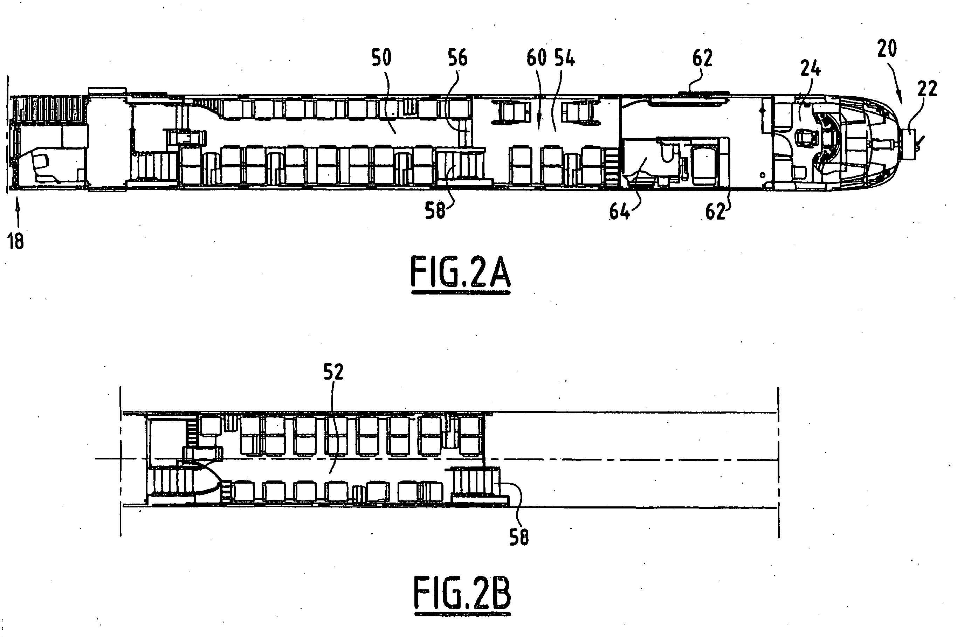

Un premier mode de réalisation du véhicule d'extrémité 14 est représenté en détail sur la figure 2. Ce véhicule comporte une extrémité 18 équipée de moyens de liaison au véhicule intermédiaire 16 adjacent. Son autre extrémité notée 20 constitue une extrémité libre. Toutefois, cette extrémité est équipée de moyens 22 d'accouplement mécanique à une rame identique.

A son extrémité libre 20, la voiture d'extrémité 14 comporte une cabine de conduite 24 comportant des instruments de conduite de la rame. Comme connu en soi, ces instruments de conduite sont reliés à la locomotive 12 afin de permettre la commande de celle-ci.

L'extrémité libre 20 du véhicule présente une hauteur progressivement croissante vers la partie médiane du véhicule délimitant une face avant inclinée 26 dans laquelle est ménagé un pare-brise transparent 28 permettant la visibilité vers l'extérieur depuis la cabine 24.

Le véhicule d'extrémité 14 comporte deux sections successives de hauteurs distinctes. Ainsi, le toit noté 30 du véhicule est étagé.

Plus précisément, le véhicule comporte, depuis son extrémité libre 20, une section basse 32 avec un tronçon de toit abaissé 34 prolongé vers l'extrémité de liaison 18 par une section haute 36 avec un tronçon de toit surélevé 38. Les tronçons de toit abaissé 34 et surélevé 38 sont liés l'un à l'autre par un tronçon de toit incliné 40 délimitant une section intermédiaire du véhicule. Cette section de toit incliné 40 s'élève progressivement du tronçon de toit abaissé 34 vers le tronçon de toit surélevé 38.

Les tronçons de toit successifs 34, 40 et 38 présentent généralement une forme cylindrique de section semi-circulaire, avec les génératrices s'étendant suivant la longueur du véhicule. Ainsi, la section de toit inclinée 40 formant une rampe est généralement convexe et fait saillie vers l'extérieur. De préférence, une plage du tronçon de toit incliné 40 est transparente pour permettre un accès visuel depuis l'intérieur du véhicule vers l'extérieur.

La section basse 32 s'étend sur une longueur supérieure au cinquième de la longueur du véhicule d'extrémité 14. Avantageusement, la longueur de la section basse 32 est comprise entre le cinquième et les quatre cinquièmes de la longueur du véhicule d'extrémité. Suivant un mode de réalisation préféré, la longueur de la section basse est sensiblement égale à la moitié de la longueur du véhicule.

La hauteur de la section basse du véhicule est comprise entre 3,6 m et 4,2 m. Elle est par exemple de 3820 mm. La hauteur de la section haute du véhicule est comprise entre 4,3 m et 5,2 m. Elle est par exemple de 4575 mm.

Avantageusement, la hauteur de la section haute 36 est égale à la hauteur des véhicules intermédiaires 16 de la rame.

Avantageusement, le rapport de la hauteur de la section basse 32 sur la hauteur de la section haute 36 est compris entre 0,69 et 0,98. De préférence, ce rapport est compris entre 0,81 et 0,85. Dans l'exemple considéré, ce rapport est égal à 0,83.

La différence de hauteur entre les sections haute et basse est avantageusement comprise entre 0,1 m et 1,6 m et de préférence entre 0,7 m et 0,8 m. Dans l'exemple considéré, elle est de 0,755 m.

La longueur de la section de toit incliné 40 est comprise entre 2 m et 4 m et est par exemple égale à 3 m. Ainsi, la pente du tronçon de toit incliné 40 est comprise entre 0,17 et 0,38.

Comme illustré sur la figure 2, la section haute 38 comporte deux planchers superposés 50, 52 sur la surface desquels sont installés des sièges pour le confort des passagers. En revanche, la section basse 34 comporte un unique plancher 54.

Dans le cas particulier d'un véhicule avec une section basse équivalente aux quatre cinquièmes de la longueur totale, le véhicule ne comporte qu'un seul niveau à un seul plancher 54.

Le plancher 54 est disposé à une hauteur intermédiaire entre les hauteurs des planchers inférieur 50 et supérieur 52 de la section haute 36. Un escalier 56 est prévu entre le plancher inférieur 50 et le plancher unique 54 pour permettre l'accès des passagers. Un second escalier 58 est disposé entre le plancher unique 54 et le plancher supérieur 52 pour l'accès de passagers. L'escalier 58 est disposé dans la section intermédiaire du véhicule couverte par le tronçon de toit incliné 40.

Des sièges sont prévus dans une plage du plancher unique 54 adjacente à la section haute 36 du véhicule, pour former un espace habitable 60 de transport des passagers. Des convertisseurs 61 sont installés sous la caisse du véhicule au dessous du plancher unique 54 de la section basse.

Des portes 62 sont ménagées dans les flancs du véhicule en arrière de la cabine 24, entre la cabine de conduite 20 et l'espace habitable 60. Ces portes sont prévues à l'endroit des bogies.

De même, des toilettes 64 et un couloir sont prévus sur le plancher unique 54 entre les portes d'accès 62 et l'espace habitable 60 équipé de sièges.

Par ailleurs, le véhicule d'extrémité comporte avantageusement des lests 66, 68 rapportés dans la partie basse de la caisse.

On constate qu'une telle rame peut supporter des vents transversaux très élevés, tout en conservant sa vitesse d'exploitation nominale sans que des problèmes de stabilité n'apparaissent, notamment dans le véhicule d'extrémité, lorsque celui-ci est situé à l'avant de la rame en considérant le sens d'avancement de la rame.

En effet, on comprend que la présence, suivant la longueur du véhicule d'extrémité, de deux sections de hauteurs différentes permet de réduire la surface offerte aux vents transversaux, tout en conservant une habitabilité importante du véhicule, la section haute permettant la mise en place de deux niveaux de sièges autorisant l'accueil d'un nombre élevé de passagers.

Par ailleurs, la partie basse permet de réduire la hauteur du point d'application des efforts aérodynamiques transversaux et ainsi de réduire le moment aérodynamique de renversement.

En outre, la mise en place de lest dans la partie basse du véhicule d'extrémité permet d'améliorer encore sa stabilité, notamment à vide lorsque celui-ci est en tête de rame en considérant le sens d'avancement.

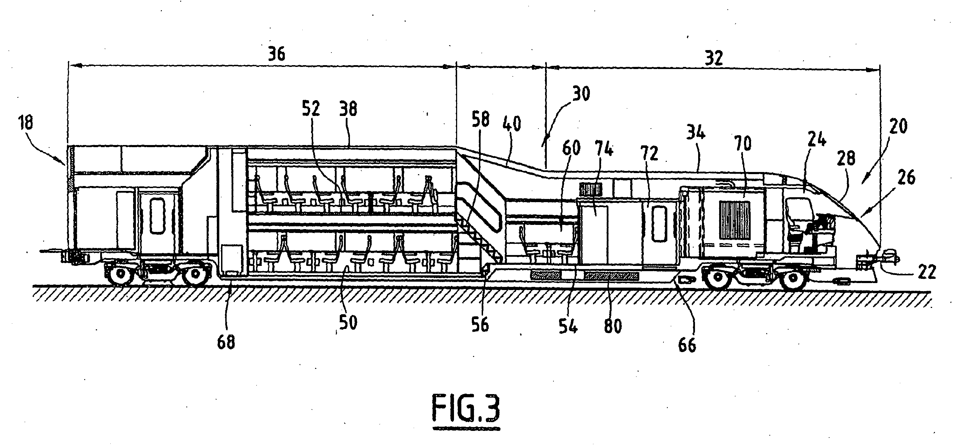

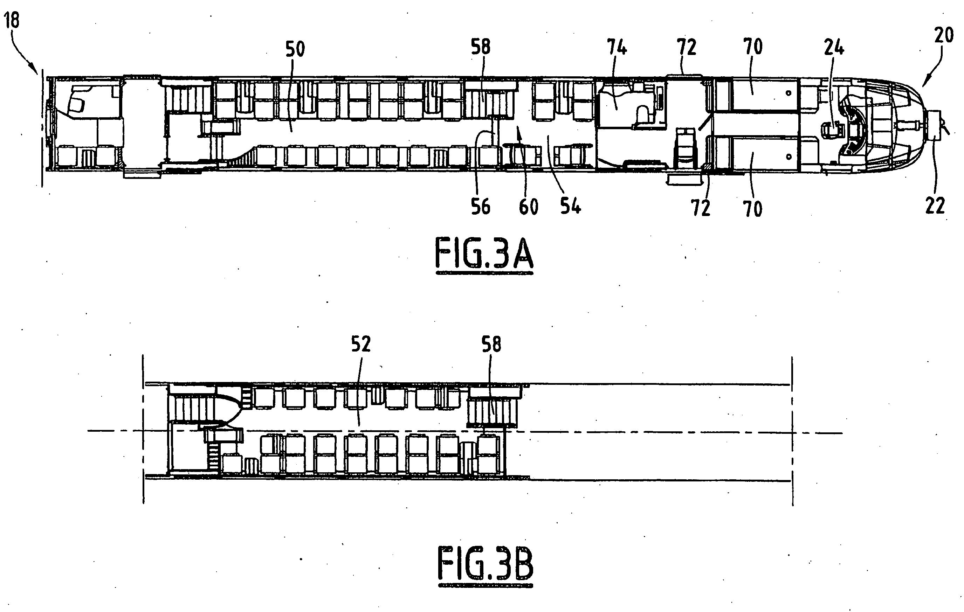

Sur la figure 3 est représentée une variante de réalisation du véhicule d'extrémité. Seules les différences seront décrites ici.

Sur le plancher unique 54, entre la cabine de conduite 24 et l'espace habitable 60, sont disposés successivement un ensemble de convertisseurs et de batteries 70, deux portes d'accès opposées 72 ménagées dans les flancs du véhicule et une cabine toilette 74. Ainsi, les portes 72 sont disposées en arrière du bogie extrême.

Des réservoirs 80 sont disposés sous le plancher 54.

## Revendications

1. Véhicule d'extrémité (14) pour transport terrestre guidé (10), le véhicule (14) comportant une caisse (17) présentant une extrémité libre (20) et une extrémité (18) de liaison aux voitures suivantes (16) de la rame, le véhicule étant susceptible de circuler à une vitesse supérieure ou égale à 140 km/h, le toit (30) du véhicule étant étagé et le véhicule comportant, depuis son extrémité libre (20), une section basse (32) avec un tronçon de toit abaissé (34) prolongé vers l'extrémité de liaison (18) par une section haute (36) avec un tronçon de toit surélevé (38), la section basse (32) s'étendant sur au moins un cinquième de la longueur du véhicule d'extrémité (14), **caractérisé en ce que** la section haute (38) comporte deux planchers superposés (50, 52) pour le transport des passagers, et la section basse (34) comporte un unique plancher (54) pour le transport des passagers.

2. Véhicule selon la revendication 1, **caractérisé en ce que** la section basse (32) s'étend entre le cinquième et les quatre cinquièmes de la longueur totale du véhicule d'extrémité (14).

3. Véhicule selon la revendication 2, **caractérisé en ce que** la section basse (32) s'étend sur sensiblement la moitié de la longueur totale du véhicule d'extrémité (14).

4. Véhicule selon l'une quelconque des revendications précédentes, **caractérisé en ce que** le toit (30) comporte une rampe (40) reliant le tronçon abaissé (34) au tronçon surélevé (38).

5. Véhicule selon la revendication 4, **caractérisé en ce que** la rampe (40) est généralement convexe et fait saillie vers l'extérieur.

6. Véhicule selon la revendication 4 ou 5, **caractérisé en ce que** la rampe (40) comporte une plage transparente.

7. Véhicule selon l'une quelconque des revendications précédentes, **caractérisé en ce qu'**il comporte un lest (66, 68) disposé dans la partie basse de la caisse.

8. Véhicule selon l'une quelconque des revendications précédentes, **caractérisé en ce qu'**il est dépourvu de moyens locomoteurs.

9. Véhicule selon l'une quelconque des revendications précédentes, **caractérisé en ce que** le rapport de la hauteur de la section basse (32) sur la hauteur de la section haute (36) est compris entre 0,69 et 0,98.

10. Véhicule selon la revendication 9, **caractérisé en ce que** la différence de hauteur entre la section haute (36) et la section basse (32) est comprise entre 0,1 m et 1,6 m.

11. Véhicule selon l'une quelconque des revendications précédentes, **caractérisé en ce qu'**il comporte une cabine de conduite (24) disposée à son extrémité libre (20).

12. Rame comportant, à un bout, un véhicule d'extrémité (14) selon l'une quelconque des revendications précédentes et, à l'autre bout, une locomotive (12), la rame comportant en outre, entre le véhicule d'extrémité (14) et la locomotive (12), au moins un véhicule intermédiaire (16) prolongeant le véhicule d'extrémité (14) depuis son extrémité de liaison, les véhicules intermédiaires (16) étant dépourvus de moyens locomoteurs.

13. Rame selon la revendication 12, **caractérisé en ce que** le ou chaque véhicule intermédiaire (16) comporte deux planchers superposés pour le transport des passagers.

## Claims

1. End vehicle (14) for guided surface transport (10), the vehicle (14) comprising a body (17) having a free end (20) and an end (18) for connection to the following carriages (16) of the set of coaches, the vehicle being able to travel at a speed greater than or equal to 140 km/h, the roof (30) of the vehicle being tiered and the vehicle comprising from the free end thereof (20) a low section (32) with a section of lowered roof (34) which is extended towards the connection end (18) by a high section (36) with a section of elevated roof (38), the low section (32) extending over at least a fifth of the length of the end vehicle (14), **characterised in that** the high section (38) comprises two superimposed floors (50, 52) for transporting passengers and the low section (34) comprises a single floor (54) for transporting passengers.

2. Vehicle according to claim 1, **characterised in that** the low section (32) extends between a fifth and four fifths of the total length of the end vehicle (14).

3. Vehicle according to claim 2, **characterised in that** the low section (32) extends over approximately half of the total length of the end vehicle (14).

4. Vehicle according to any of the preceding claims, **characterised in that** the roof (30) comprises a ramp (40) connecting the lowered section (34) to the elevated section (38).

5. Vehicle according to claim 4, **characterised in that** the ramp (40) is generally convex and projects towards the exterior.

6. Vehicle according to claim 4 or 5, **characterised in that** the ramp (40) comprises a transparent deck.

7. Vehicle according to any of the preceding claims, **characterised in that** it has ballast (66, 68) which is disposed in the low part of the body.

8. Vehicle according to any of the preceding claims, **characterised in that** it is not provided with locomotive means.

9. Vehicle according to any of the preceding claims, **characterised in that** the ratio of the height of the low section (32) to the height of the high section (36) is between 0.69 and 0.98.

10. Vehicle according to claim 9, **characterised in that** the difference in height between the high section (36) and the low section (32) is between 0.1 m and 1.6 m.

11. Vehicle according to any of the preceding claims, **characterised in that** it has a driver's cab (24) which is disposed at the free end (20) thereof.

12. Set of coaches, comprising at one end, an end vehicle (14) according to any of the preceding claims and, at the other end, an engine (12), the set of coaches comprising furthermore, between the end vehicle (14) and the engine (12), at least one intermediate vehicle (16) extending the end vehicle (14) from the connection end thereof, the intermediate vehicles (16) not being provided with locomotive means.

13. Set of coaches according to claim 12, **characterised in that** the or each intermediate vehicle (16) comprises two superimposed floors for transporting passengers.

## Patentansprüche

1. Endwagen (14) für zwangsgeführtes Landverkehrsmittel (10), wobei der Wagen (14) einen Wagenkasten (17) mit einem freien Ende (20) und einem Ende (18) zur Verbindung mit den nachfolgenden Wagen (16) des Zugs aufweist, und der Wagen mit einer Geschwindigkeit von 140 km/h oder mehr fahren kann, wobei das Dach (30) des Wagens stufenförmig ansteigt und der Wagen, von seinem freien Ende (20) ausgehend, einen tiefen Abschnitt (32) mit einem abgesenkten Dachteil (34), gefolgt von einem hohen Abschnitt (36) mit einem erhöhten Dachteil (38) umfasst, wobei der tiefe Abschnitt (32) sich über wenigstens ein Fünftel der Länge des Endwagens (14) erstreckt,
**dadurch gekennzeichnet, dass** der hohe Abschnitt (38) zwei übereinanderliegende Böden (50, 52) für den Personentransport aufweist, und der tiefe Abschnitt (34) einen einzigen Boden (54) für den Personentransport aufweist.

2. Wagen nach Anspruch 1, **dadurch gekennzeichnet, dass** der tiefe Abschnitt (32) sich zwischen ein Fünftel und vier Fünftel der Gesamtlänge des Endwagens (14) erstreckt.

3. Wagen nach Anspruch 2, **dadurch gekennzeichnet, dass** der tiefe Abschnitt (32) sich im Wesentlichen über die Hälfte der Gesamtlänge des Endwagens (14) erstreckt.

4. Wagen nach einem der vorangehenden Ansprüche, **dadurch gekennzeichnet, dass** das Dach (30) eine Rampe (40) umfasst, die den abgesenkten Teil (34) mit dem erhöhten Teil (38) verbindet.

5. Wagen nach Anspruch 4, **dadurch gekennzeichnet, dass** die Rampe (40) generell konvex ist und nach außen vorsteht.

6. Wagen nach Anspruch 4 oder 5, **dadurch gekennzeichnet, dass** die Rampe (40) einen transparenten Bereich umfasst.

7. Wagen nach einem der vorangehenden Ansprüche, **dadurch gekennzeichnet, dass** er einen im unteren Teil des Wagens angeordneten Ballast (66, 68) umfasst.

8. Wagen nach einem der vorangehenden Ansprüche, **dadurch gekennzeichnet, dass** er keine Antriebseinrichtungen umfasst.

9. Wagen nach einem der vorangehenden Ansprüche, **dadurch gekennzeichnet, dass** das Verhältnis der Höhe des tiefen Abschnitts (32) zur Höhe des hohen Abschnitts (36) zwischen 0,69 und 0,98 enthalten ist.

10. Wagen nach Anspruch 9, **dadurch gekennzeichnet, dass** die Höhendifferenz zwischen dem hohen Abschnitt (36) und dem tiefen Abschnitt (32) zwischen 0,1 m und 1,6 m enthalten ist.

11. Wagen nach einem der vorangehenden Ansprüche, **dadurch gekennzeichnet, dass** er einen an seinem freien Ende (20) vorgesehenen Führerraum (24) umfasst.

12. Zug, umfassend, an einem Ende, einen Endwagen (14) nach einem der vorangehenden Ansprüche, und am anderen Ende eine Lokomotive (12), wobei der Zug außerdem zwischen dem Endwagen (14), ausgehend von seinem Verbindungsende, und der Lokomotive (12) wenigstens einen den Endwagen (14) verlängernden Mittelwagen (16) umfasst, wobei die Mittelwagen (16) keine Antriebseinrichtungen umfassen.

13. Zug nach Anspruch 12, **dadurch gekennzeichnet, dass** jeder Mittelwagen (16) zwei übereinanderliegende Böden für den Personentransport umfasst.
